(19) **Europäisches Patentamt / European Patent Office / Office européen des brevets**

(11) **EP 3 879 474 A1**

(12) # EUROPEAN PATENT APPLICATION

(43) Date of publication:
**15.09.2021 Bulletin 2021/37**

(51) Int Cl.:
***G06Q 10/10*** *(2012.01)*

(21) Application number: **20163032.4**

(22) Date of filing: **13.03.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Unify Patente GmbH & Co. KG
81739 München (DE)**

(72) Inventors:
- **SCHIFFER, Wolfgang
 52134 Herzogenrath (DE)**
- **El Ouaaziza, Kamal Ddin
 52066 Aachen (DE)**
- **Teke, Alper
 52070 Aachen (DE)**

(74) Representative: **Pösentrup, Judith et al
Schaafhausen Patentanwälte PartGmbB
Prinzregentenplatz 15
81675 München (DE)**

(54) **COMPUTER-IMPLEMENTED METHOD OF MANAGING A PLURALITY OF CONVERSATIONS AND TO A COMMUNICATION AND COLLABORATION PLATFORM**

(57) The present invention relates to a computer-implemented method of managing a plurality of conversations at a user's client that is connected to other clients via a communication and collaboration platform, wherein the content of the conversations is modifiable by users (1) of the other clients, and wherein the method comprises the steps of
- receiving, at the user's client, data relating to a plurality of conversations the client's user (1) participates in using the communication system;
- organizing the plurality of conversations at the user's client on the basis of an importance score defining the importance of a conversation for the user (1), wherein the importance score is determined on the basis of data relating to the client user's behavior, and on the basis of data relating to the client user's situation context, both the user behavior and the user situation context determining a usage context, and wherein a higher importance score indicates a conversation with high importance to the user, and a lower importance score indicates a conversation with low importance to the user, and
- visualizing, on a display device of the client, the conversations organized according to their respective importance scores thus determined.

Furthe, the present invention relates to a communication and collaboration platform, comprising a plurality of clients connected to a media server via a communication network, wherein the communication and collaboration platform is adapted to carry out the method of managing a plurality of conversations.

Fig. 9

| Conv. A | |
|---|---|
| Creating posts | 30 |
| Thorough reading | 30 |
| Frequency of usage | 40 |

| Conv. B | |
|---|---|
| Creating posts | 10 |
| Thorough reading | 30 |
| Regular usage | 50 |

| Conv. C | |
|---|---|
| Creating posts | 10 |
| Thorough reading | 0 |
| Regular usage | 20 |

EP 3 879 474 A1

**Description**

The present invention relates to a computer-implemented method of managing a plurality of conversations and to a communication and collaboration platform adapted to carry out the method.

Nowadays, it is rather common to conduct communication and collaboration sessions as meetings or conferences online with a plurality of remotely located users connected to each other via a media server in the Internet. Every participant uses a client at which he or she receives and handles a plurality of conversations thus generated. For example, on the client's display, a list of conversations may be shown in chronological order. The content of a conversation, however, may be modified and the modified conversation will then be reported to all participants of that conversation. This needs to be notified to the participants so that they are aware of any changes or modifications on a conversation they are participating in.

According to solutions known from prior art, the participants of a modified conversation will be notified, for example, by adding a change counter to a conversion, by an active notification, or by showing the conversation with the latest change on top of the list of conversations. This is done in order to direct the user's focus to those conversations which have changed recently.

Depending of the number of conversations in which a user participates and the frequency of changes in those conversations, the user can get easily overwhelmed by the changes and notifications for these changes. In addition, conversations of higher interest, but with less regular content changes, may move down in the list of conversations, making them hard to find when they are needed.

To be able to track conversations, it is also known from prior art solutions to provide means for searching for specific conversations, adding labels to the conversations, or declaring conversations as 'favorites'.

However, all these solutions known from prior art have in common that the user is explicitly forced to apply a certain configuration or apply a sequence of manual steps. Even more, going forward, the user has to maintain labels and favorites, otherwise these 'organizational' helpers will turn useless after a while, since new conversations emerge, and others get abandoned, etc.

Thus, with respect to communication and collaboration platforms and solutions known from prior art, as for example Circuit, there exists a problem of efficiently and reliably organizing and visualizing a plurality of conversations at a client automatically, so as to enable a user to focus on those conversations that have a high importance to him or her.

Therefore, the present invention is based on the object to provide a computer-implemented method of managing a plurality of conversations and a corresponding communication and collaboration platform that indicate to a user the conversations of high interest at one glance.

The object is solved by a computer-implemented method of managing a plurality of conversations having the features according to claim 1 and by a communication and collaboration platform having the features according to claim 12. Preferred embodiments of the invention are defined in the respective dependent claims.

Therefore, according to the present invention, a computer-implemented method of managing a plurality of conversations at a user's client that is connected to other clients via a communication and collaboration platform is provided, wherein the content of the conversations is modifiable by users of the other clients, and wherein the method comprises the steps of

- receiving, at the user's client, data relating to a plurality of conversations the client's user participates in using the communication system;
- organizing the plurality of conversations at the user's client on the basis of an importance score defining the importance of a conversation for the user, wherein the importance score is determined on the basis of data relating to the client user's behavior, and on the basis of data relating to the client user's situation context, both the user behavior and the user situation context determining a usage context, and wherein a higher importance score indicates a conversation with high importance to the user, and a lower importance score indicates a conversation with low importance to the user, and
- visualizing, on a display device of the client, the conversations organized according to their respective importance scores thus determined.

According to a preferred embodiment of the invention, a Multiple Correspondence Analysis, MCA, is used for calculating the importance score for organizing the plurality of conversations with more than one usage context. Since more than one usage context may be applied at the same time, for example, in a scenario when working on a certain conversation at a given time, when traveling and when using a mobile device, being online, etc., multiple dimensions need to be taken into account at the same time as well. Using the MCA advantageously enalbes analyzing a pattern of relationships between conversations and the usage context.

According to another preferred embodiment of the invention, the importance score is determined continuously. Thus, the conversations are always updated as to their specific relevance or importance to the user, depending for example, on a change of the use context, as a conversation might become more or less important to the user.

According to still another preferred embodiment of the invention, the data relating to the plurality of conversations is a new message or a modification of the content of an already existing message.

Preferably, the user behavior comprises a frequency of usage of a conversation of the plurality of conversations, wherein the frequency of usage of the conversation is determined by measuring how often a conversation is opened within a time range.

The user behavior may further comprise a intensity of reading, wherein the the intensity of reading is determined by measuring the time that a conversation is opended and/or by measuring how fast the user scrolls through the messages comprised in a conversation.

According to yet another preferred embodiment of the invention, the user behavior further comprises measuring how many posts the user himself or herself creates in a conversation.

Preferably, the situation context comprises at least one of the following items:

- a time factor relating to how often and how frequently a conversation is accessed by the user,
- a location factor relating to the location at which the user is located when accessing the conversation,
- a movement factor relating to a the user being either traveling or stationary,
- a device factor relating to the device the user uses to access the conversation.

Moreover, it is advantageous, if external sensors comprised in the device used by the user to access the conversation, in particular, GPS or accelerometers, pedometers, are used to determine the situation context.

Preferably, the situation context is correlated to the user behaviour.

Further, the visualizing step may comprise marking the conversations of the plurality of conversations that have the highest importance scores.

According to the present invention, a communication and collaboration platform is provided, comprising a plurality of clients connected to a media server via a communication network, wherein the communication and collaboration platform is adapted to carry out the method described above.

Thus, the inventive computer-implemented method and communication and collaboration platform enable determining those conversations that are important to a user at any time, in any situation, automatically in a reliable and efficient manner based on the user's behavior. The inventive method does not require any configuration or interaction to be done the user. Thereby, the user saves working time and will not be distracted by conversations that are of no further relevance to him or her. Rather, the user will be able to efficiently focus on only those conversations that are of any importance to him or her.

The invention and embodiments thereof will be described below in further detail in connection with the drawing.

Fig. 1    shows an example of an indicator matrix for calculating an importance score according to an embodiment of the invention;

Fig. 2    shows a visualization of conversations as determined by the geometric data analysis MCA by using the indicator matrix according to the embodiment shown in Fig. 1;

Fig. 3    shows a visualization of the usage contexts by using the indicator matrix shown in Fig. 1 according to an embodiment of the invention;

Fig. 4    shows a further visualization of the combined conversation and usage contexts shown in Fig. 2 and Fig. 3;

Fig. 5    shows a list of the axe prinicpals, cooridinates, the cos 2 and the contribution of conversations and contexts for calculating an importance score based on the table shown in Fig. 1 according to an embodiment of the invention;

Fig. 6    shows a further visualization of the conversations and contexts using the axes pricipals Dim1 and Dim2 as determined according to the embodiment of Fig. 5;

Fig. 7    shows a table comprising the distances between conversations and the usage contexts, as illustrated in Fig. 6;

Fig. 8    shows a table comprising the importance values as derived from the table according to Fig. 7;

Fig. 9    schematically illustrates how the importance score is changed over a period of time; and

Fig. 10    shows a diagram illustrating how the importance score of a conversation may evolve over a time period due to user behavior within a given situation context.

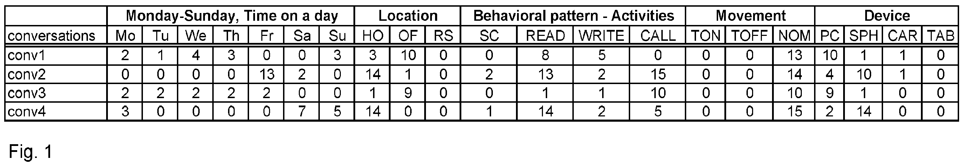

Fig. 1 schematically shows an example of an indicator matrix used for calculating an importance score, as outlined further below.

At first, however, it is noted that as already mentioned above, the proposed solution provides easy access to those conversations, which are of importance to a user, without the need to apply manual configurations like labels, favorites etc. by the user himself. This is achieved by observing the user's behavior in and on conversations he or she is participating in over a certain period of time. In addition the user's situation context, like time of usage, location, which device is used, etc. is observed, too. By putting these aspects, both user behavior and the situation context, together, a very unique and personal importance score may be computed, as outlined below. This importance score may then be used to adapt the User Interface, UI, in such a way that allows the user to work with highest efficiency in the given situation context.

It is noted that in the following, the user's behavior and the user's situation context, are referred as 'usage context'. A statistical method will be applied so as to calculate an importance score for conversations based on the above mentioned usage context taking into account the users behavior and the situation context. Basically, conversations with a higher importance score are more important to a user than conversations with a lower importance score. Moreover, it is noted that calculating the importance score is a constantly ongoing activity so as to keep the user up to date about activities and modifications of his or her conversations.

First of all, in the following it is described how behavioral patterns may be determined according ot which an couple of examples for observable user behavior which may be measured and analyzed and which have an effect on the importance may be considered. For example, the user behaviour may be determined on the basis of the following events and scenarios:

- The frequency of usage: This may be identified by measuring how often a conversation is opened within a time range, e.g. within the last four weeks. This increases the importance for this conversation. The importance decreases, if the conversion gets less used.

- Thorough reading: This may be identified by observing the time a conversation is opened and how fast the user scrolls through the conversion. In case he or she slowly scrolls down through every post, the importance is higher as if he or she simply rushes through the end to see the last post, without taking care of those in between.

- In case the user simply selects a conversation with new notifications and then directly moves to the next conversation, the importance will be reduced, as obviously the user is not interested in the changes.

- Creating posts: If the frequency of posts created by a user in a conversion increases or decreases, so does the importance.

- Participating in real time calls/conferences: If a user regularly participates in calls/conferences in a certain conversation, this increases the importance of this conversation.

- Listening to recordings: If a user regularly listens to recordings of call/conferences, this increases the importance.

Moreover, the following different situation contexts that may be applied to a user using a client at any given point of time on the communication and collaboration platform (e.g. Circuit) may be considered:

- Time:
    For example, regular usage: Conversations which are used regularly on specific times, for instance every Tuesday, are evaluated with an increased importance on Tuesdays. If a conversation is not used regularly on Tuesdays any longer, the importance is reduced.
    For example, conversations for scheduled meetings: Conversations, which have a scheduled meeting, get an increased importance for the scheduled day.

- Location:
    For example, a user may be working at different locations, for instance, at a home office, or a regular office, or at remote customer sites. Based on the location, the observed behavioral patterns might be different:

    Home Office: When being in home office, conversations with some colleagues are frequently used and therefore important, but when in the office, they are not.

Customer sites: If a user works regularly at a remote customer sites, certain project related conversations are important, depending on the customer site, while they are not as important when working in the office.

- Movement (and presence state):
  It is noted that in this context, movement, with a certain minimum speed, is defined as 'traveling'. When traveling, this can also influence the importance score based on the observed behavioral pattern:

  Traveling + presence status 'away': The combination of 'traveling' and presence status 'away', can be interpreted as driving. In this case, only conversation with active conference calls might be considered as important. The UI might offer easy means to join those ongoing conference calls 'hand-free'.
  Traveling + presence status 'online': The combination of 'traveling' and presence status 'online', can be interpreted as traveling by train or as co-driver. In this case, different conversations might get important based on the observed behavioral pattern when traveling.

- Apple CarPlay, Android Auto:
  In this context the observed behavioral patterns might be reduced to participation in active calls or conferences. In addition new posts in conversations with a high importance score may be read out to the user.

- Device:
  For example, if the user works on his mobile device, he or she might prefer conversations where he or she usually consumes content instead of creating content, due to the limitations of the device. In this case those conversation will be evaluated with a higher importance.

- Other external sensors:
  For example, besides GPS and accelerometer, more sensors, e.g. pedometer, which are available within mobile devices today or in the future, may be used to add more dimensions when calculating the behavioral pattern.

Next, the calculation of the importance score based on the user's behavior and the user's situation context in combination, namely, on the 'usage context' as already mentioned above will be described.

As more than one usage context may be applied to a user at the same time, a so-called Multi-Dimensional importance score will be determined. For instance, a user may be working on a certain conversation at a given time, when traveling and when using a mobile device, being online, etc. Also, the number of observed user behaviors is not static, but rather dynamic, that means that eventually one or more differing user behaviors may be observed for a conversation. Also the number of applicable situation contexts is also not static, but dynamic. Thus, the method used to calculate the importance score needs to take all of the above into account.

For being able to determine the importance score on a multi-dimensional basis, a data analysis technique may be applied to calculate the importance score, namely, the 'Multiple Correspondence Analysis' (MCA), which in these applications determines and reveals associations between conversations and a set of various usage contexts. In particular, the MCA here is used to analyze the patterns of relationships between conversations and the usage context. Technically, the MCA will be obtained by using a standard correspondence analysis on an indicator matrix.

For example, according to an embodiment, a user may be working in a home office using his or her mobile device for reading some of the conversations listed and displayed at his or her device. If this situation contexts (home office, use of mobile device) are observed, the MCA will expose conversations with a high affinity to these set of usage contexts (that means, with a high importance score). The application can use the importance score to show these conversations exclusively or in optimized way.

Further, assuming now that the user is switching from his or her mobile device to his notebook, as he or she starts to write posts in some conversation, the MCA will expose a different set of conversations which have a high affinity to this set of usage contexts.

Depending on the usage contexts, the application can be adapted to support the user as much as possible.

As mentioned above, an example for an indicator matrix for the MCA according to an embodiment of the invention is shown in Fig. 1. This is a table that lists the conversations of a user and the number of observations of a specific usage context.

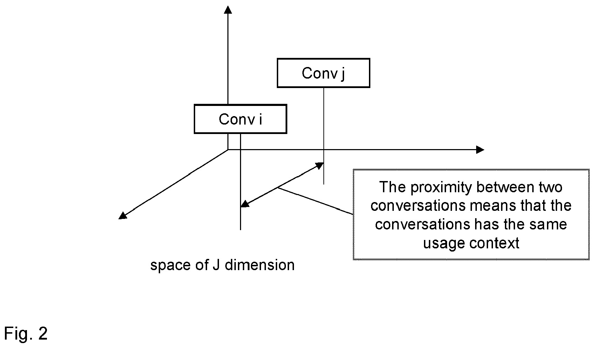

In the embodiment shown, for example, it can be seen that the 'Conv I' is heavily accessed on Thursday, mostly when being in the office, both for reading and writing, and most of the times when not traveling, namely, by using the PC device. In the table shown in Fig. 1, ever conversation lists its occurrences of each usage context (row). These are the conversations coordinates in the multidimensional space, as will be further outlined with respect to Fig. 2.

Thus, the available data basically is a contingency table containing the N conversations of a specific user and their J usage contexts, whereby the rows are the different conversations, and the columns are the values of the usage frequencies for different metrics of the usage contexts categories (e.g. Home Office, Traveling, Reading, etc).

Fig. 2 shows a visualization of conversations as determined by the geometric data analysis MCA which will be used to describe, explore, summarize, and visualize information contained within the data table described with respect to Fig. 1. As already mentioned above, here, the main objectives are to study the similarities between the conversations from a multidimensional perspective, to assess the importance score in association with the usage contexts, and to study the associations between the usage contexts categories.

The MCA produces a cloud of conversations and a cloud of usage contexts: Studying the conversations involves looking at the data table (see Fig. 1) row by row. Each conversation represents a point in multidimensional Euclidean space with the frequencies for different usage contexts as coordinates. Two conversations are close to each other if the user utilizes the latter in the same way, and are farther apart if they have very different usage contexts. As indiated in Fig. 2 there are two conversations, Conv j and Conv I, whereby the proximity between these two conversations means that the conversations both have the same usage context.

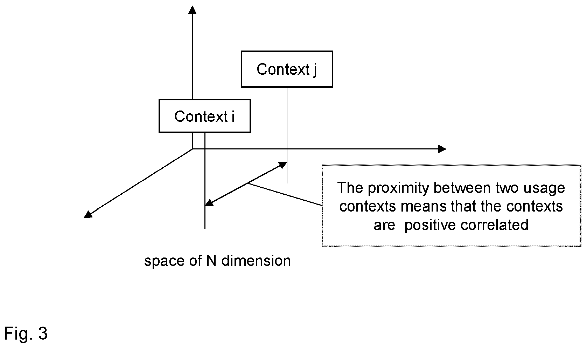

Fig. 3 shows a visualization of the usage contexts according to an embodiment of the invention. Each usage context category defines a point with frequencies for the different conversations as coordinates. As can be seen here, there are two usage contexts. They are determined to be close to each other if they are often taken together.

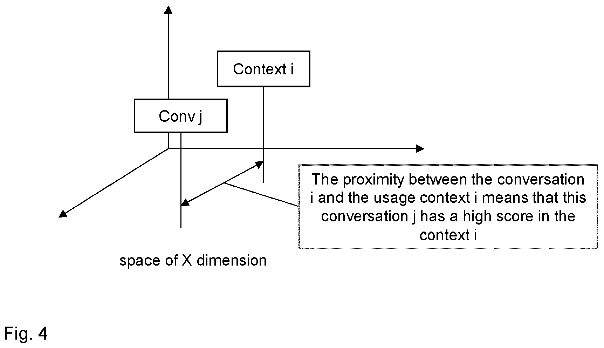

Fig. 4 shows a further visualization of the combined conversation and usage contexts shown in Fig. 2 and Fig. 3, as a result of the utilization of the MCA. The representation of the usage contexts, as shown in Fig. 3 and the conversations as shown in Fig. 2, which are related to the usage contexts in the same multidimensional space, as shown here, allows to calculate the importance score for the user.

In the embodiment shown here, the conversations and the context categories do not reside in the same space (J dimension space for the conversations and N dimension space for the context categories, However, the pseudobarycentric representation, also called the symmetric map, ensures that both barycentric properties are represented simultaneously on the same multidimensional space in order to estimate the importance score of conversations by usage contexts.

In the following, an example of an importance score calculation for a specific user on the basis of the table of Fig. 1 will be outlined in detail according to an embodiment of the invention. Thus, the usage contexts used in this example are:

**Time: MO-SU:** Monday-Sunday
**Location: OF:** At the Office **HO:** Home Office **RS:** Remote site
**Behavior/Activity: SC:** Scrolling **READ:** Reading **WRITE:** Writing **CALL:** Calling
**Movement: TON:** Traveling online **TOFF:** Traveling offline **NOM:** No Movement
**Devices: SPH:** Smartphone **CAR:** Android-Carplay **TAB:** Tablet **PC:** Computer

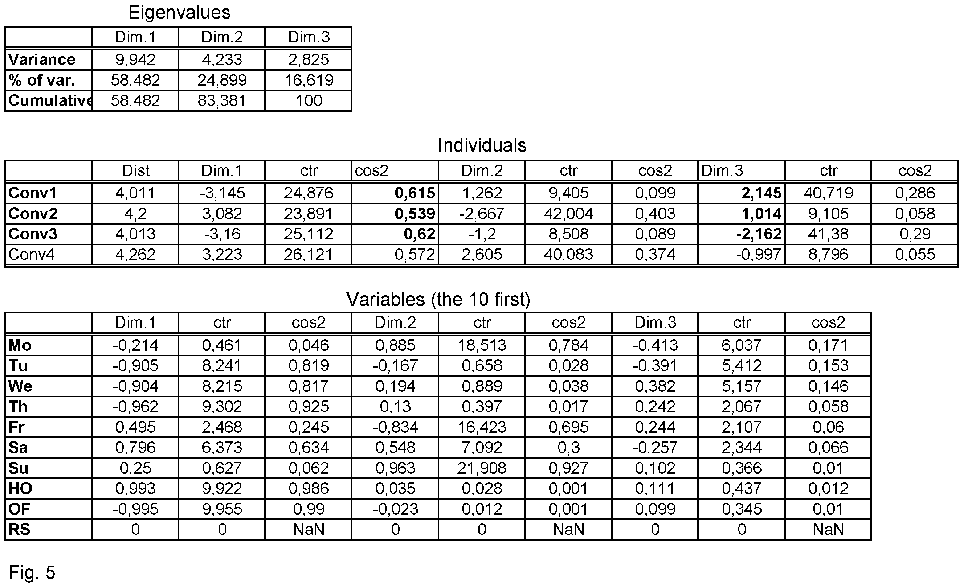

As shown in Fig. 5, in which a list of the axe prinicpals, cooridinates, the cos 2 and the contribution of conversations ad contexts is presented, the calculation starts with the extraction of the eigenvalues/variances retained by each dimension (axis) and the estimation of the new coordinates, contribution and cos2 for conversations and usage contexts, respectively. The inertia of the first dimension shows if there are strong relationships between usage contexts and suggests the number of dimensions that should be studied. The first two dimensions of analyses express 83.38% of the total dataset inertia; that means that 83.38% of the conversations (or usage contexts) cloud total variability is explained by the plane. Reducing the dimensionality of the data to the axes Dim1, Dim2 and Dim3 allow to extract the relationship between the conversations and the usage contexts dynamically without losing important information.

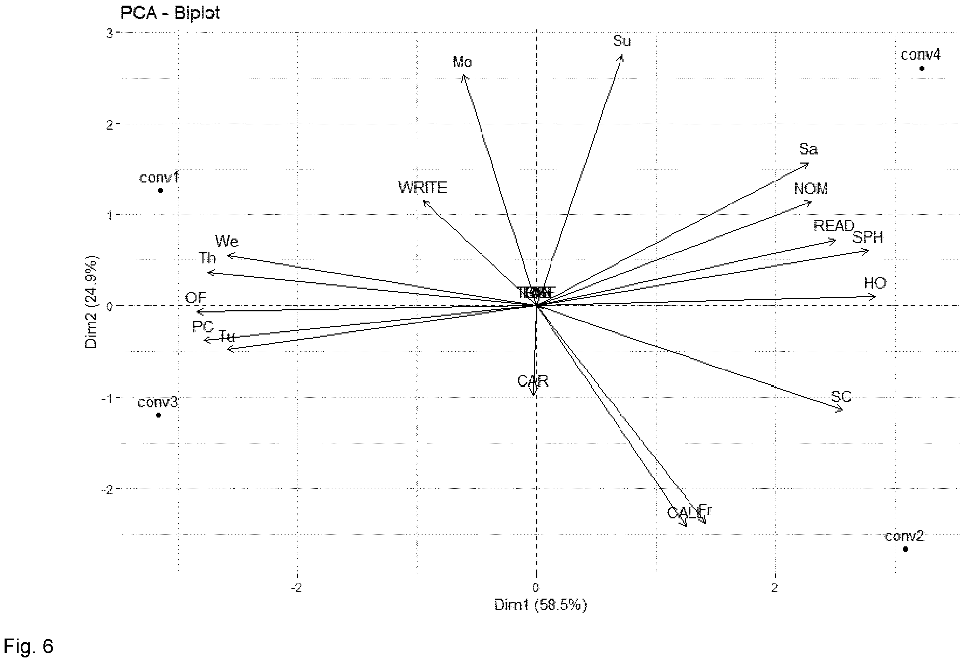

Fig. 6 shows a further visualization of the conversations and contexts using the axes pricipals Dim1 and Dim2, as outlined above. As can be seen in the graph illustrated in Fig. 6, analyzing the proximity between the conversations and the usage contexts on the graph shows that the user is active in the conversations conv1 and conv3 when in the office (OF) and using the computer (PC). The conv1 is mostly used to write posts and conv2 for calls. On the other hand the user works usually Saturday, Sunday and Friday from home, using a Smartphone and he is more active Saturday and Sunday in the conversations conv2 doing calls and Friday in the conv4 reading content.

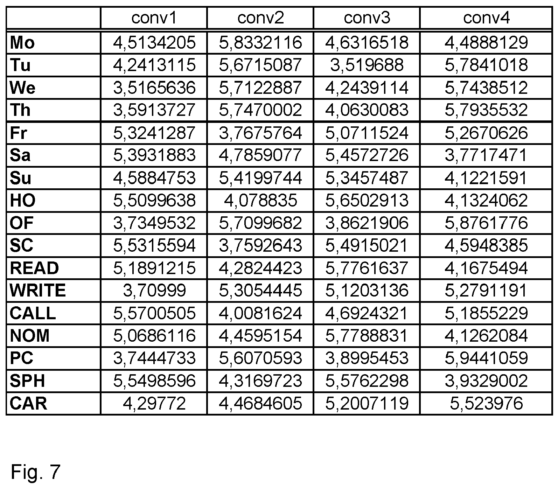

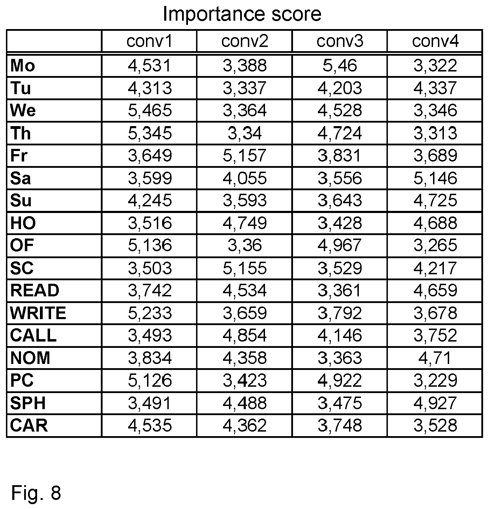

Fig. 7 shows a table listing the distances between conversations and the usage contexts according to an embodiment of the invention. These distances may be used as the importance score, as shown in Fig. 8.

Alternatively, the distances may be used by implementing the the following formula to calculate the importance score for the conversations for each usage context respectively:

$$\text{Importance score} = \frac{\text{Total of conversations distances}}{\text{conversation distance}}$$

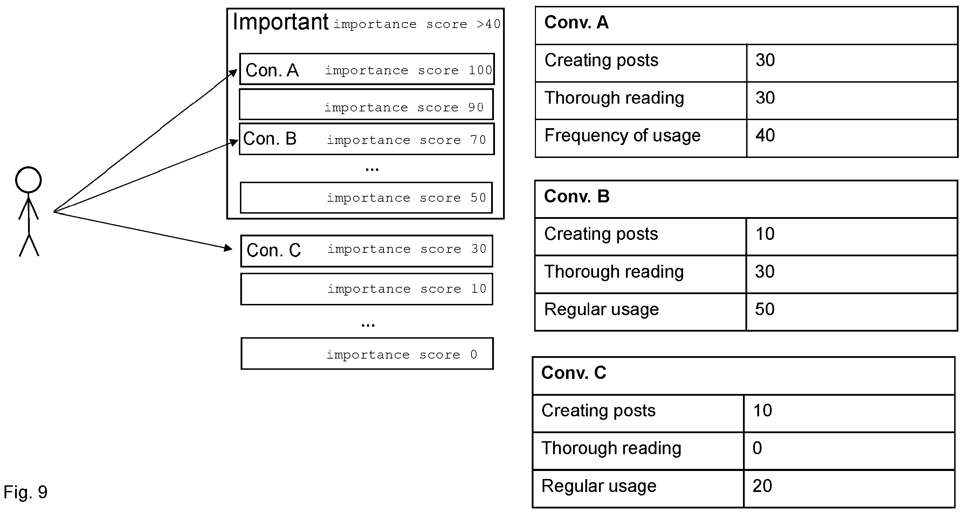

Fig. 9 schematically illustrates how the importance score, as determined in the previous tables shown in Fig. 7 and Fig. 8 may be changed over a period of time. As already has been described above, the importance score describes the affinity of conversations to a given set of usage contexts. The usage context consists of both, the situation context and the user behavior on conversations. As the user behavior on conversations evolves over time, the importance score changes over time as well. Thus, other conversations may become more important to the user, while other conversations become less interesting. As illustrated in the figure, the user 1 may take actions or may not take any action in the conversations A, B, C over a certain period of time and thereby, the importance score of the conversations will be modified.

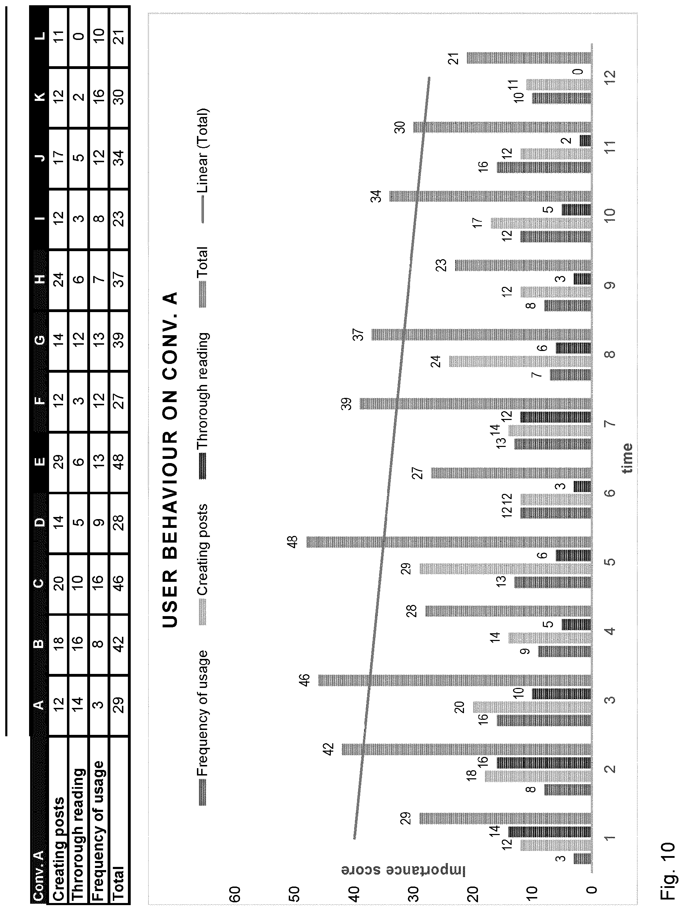

Fig. 10 shows a diagram illustrating how the importance score of a conversation may evolve over a time period due to user behavior within a given situation context. As can be seen here, the user's activities in a certain conversation are constantly decreasing over time, and so does the importance score accordingly.

In the following, a couple of examples will be given on how the importance score may be applied so as to add the user in following and accessing conversations that are of a certain relevance or importance to him or her.

**Example 1:**

The situation context is as follows: The user is moving (e.g. faster than walking speed), logged-in to Circuit with his or her mobile device, presence is 'away'.

The user behavior is as follows: No write activity from the user on conversations in Circuit, however participation in active calls/conferences, and following posts in some conversations.

By the procedure described above, conversations with a running conference call, have a high importance score in this situation. The application may also be adapted to only show those conferences with simplified means to join the conferences on the mobile device or, for instance, when using Apple Car play. In the same fashion, the application may be adapted to read out new posts in conversations to the user, whereas activities/notification in other conversations will be suppressed.

**Example 2:**

The situation context is as follows: the user is in Home Office (HO), logged-in to Circuit with his notebook device.

The user behavior is as follows: A lot of read and write activity in 1-2-1 conversations with his team mates, also in the conversations which deal with the current project escalation, participation in a regular conference call at the end of the day.

In case the Home Office (HO) location is detected, the application may be adapted to show the 1-2-1 conversations with the team mates more prominently, allowing the user to have those always in reach. Also the currently important project conversations may be shown prominently. Activities/Notifications in other conversation may be shown, but less prominently, never in a distracting way. At the time the regular conference call is about to start, this conversation takes precedence over the other conversations. When the user is back in the office (OF), the 1-2-1 conversation becomes significantly less important, since the team members can just drop by to discuss some topics.

Taking this example and looking ahead into the future for maybe 2 weeks, then, the project focus may have changed to something else and also the team mates he or she needs to collaborate with may be different now. As the computation of the importance score is a dynamic and ongoing activity, this will be reflected in the application automatically.

**Example 3:**

The situation context is as follows: The user is moving (e.g. faster than walking speed), logged-in to Circuit with his notebook device, presence is 'online'.

The user behavior is as follows: Read activity in some conversations which deal with the current projects but also read activity in conversations which are of general interest.

The application may prominently show conversations related to the current projects, but also conversations which are not project-related and which are usually not intensely followed. For instance, the user is traveling by train and prepares for a customer meeting and also has time to catch up on some, more general conversations.

**Example 4:**

The situation context is as follows: There is a conversation (for example a conversation where the major incidents are discussed at the time it happens and is active once a month for an hour or so), which, however, usually is not very active.

The user behavior is as follows: Whenever there is a post in that conversation, the user opens it immediately and stays active for an hour or two.

Thus, the application may detect based on the measured user's response time (although overall average post per day is low, another dimension increase the importance) that this is an important conversation and shows it more prominently when it's active.

**Example 5:**

The situation context is as follows: The user is set out of office and is receiving a lot of messages from different conversations.

The user behavior is as follows: The user only checks particular conversations and messages received from a certain set of people in a short period of times.

The application may now detect the out of office dimension and keeps different scores for that particular case to show the next time, when user is out of office, corresponding high ranked messages more prominently.

Summarizing the above, the method enables a user to efficiently track and handle conversations that are of particular importance for him or her, while it is not focused on analyzing specific attributes in a conversation in order to calculate the importance. It also does not require the user himself or herself to provide scoring information. This is accomplished in a procedure without user interaction. Namely, the importance score is calculated based on the observed user behavior and the user's situation context like time, location, etc. and will provide the user with reliable and accurate results according to an importance score value that may further be visualized to the user accordingly.

Reference numerals

1    user

**Claims**

1. Computer-implemented method of managing a plurality of conversations at a user's client that is connected to other clients via a communication and collaboration platform, wherein the content of the conversations is modifiable by users (1) of the other clients, and wherein the method comprises the steps of

   - receiving, at the user's client, data relating to a plurality of conversations the client's user (1) participates in using the communication system;
   - organizing the plurality of conversations at the user's client on the basis of an importance score defining the importance of a conversation for the user (1), wherein the importance score is determined on the basis of data relating to the client user's behavior, and on the basis of data relating to the client user's situation context, both the user behavior and the user situation context determining a usage context, and wherein a higher importance score indicates a conversation with high importance to the user, and a lower importance score indicates a conversation with low importance to the user, and
   - visualizing, on a display device of the client, the conversations organized according to their respective importance scores thus determined.

2. Method according to claim 1, wherein a Multiple Correspondence Analysis, MCA, is used for calculating the importance score for organizing the plurality of conversations with more than one usage context.

3. Method according to claim 1 or 2, wherein the importance score is determined continuously.

4. Method according to any one of the preceding claims, wherein the data relating to the plurality of conversations is a new message or a modification of the content of an already existing message.

5. Method according to any one of the preceding claims, wherein the user behavior comprises a frequency of usage of a conversation of the plurality of conversations, wherein the frequency of usage of the conversation is determined by measuring how often a conversation is opened within a time range.

6. Method according to any one of the preceding claims, wherein the user behavior further comprises a intensity of reading, wherein the the intensity of reading is determined by measuring the time that a conversation is opended and/or by measuring how fast the user scrolls through the messages comprised in a conversation.

7. Method according to any one of the preceding claims, wherein the user behavior further comprises measuring how many posts the user (1) himself or herself creates in a conversation.

8. Method according to any one of the preceding claims, wherein the situation context comprises at least one of the following items

    - a time factor relating to how often and how frequently a conversation is accessed by the user,
    - a location factor relating to the location at which the user is located when accessing the conversation,
    - a movement factor relating to a the user being either traveling or stationary,
    - a device factor relating to the device the user uses to access the conversation.

9. Method according to claim 8, wherein external sensors comprised in the device used by the user (1) to access the conversation, in particular, GPS or accelerometers, pedometers, are used to determine the situation context.

10. Method according to any one of the preceding claims, wherein the situation context is correlated to the user behaviour.

11. Method according to any one of the preceding claims, wherein the visualizing step comprises marking the conversations of the plurality of conversations that have the highest importance scores.

12. Communication and collaboration platform, comprising a plurality of clients connected to a media server via a communication network, wherein the communication and collaboration platform is adapted to carry out the method according to any one of the preceding claims.

| conversations | Monday-Sunday, Time on a day | | | | | | | Location | | | Behavioral pattern - Activities | | | | Movement | | | Device | | | |
|---|---|---|---|---|---|---|---|---|---|---|---|---|---|---|---|---|---|---|---|---|---|
| | Mo | Tu | We | Th | Fr | Sa | Su | HO | OF | RS | SC | READ | WRITE | CALL | TON | TOFF | NOM | PC | SPH | CAR | TAB |
| conv1 | 2 | 1 | 4 | 3 | 0 | 0 | 3 | 3 | 10 | 0 | 0 | 8 | 5 | 0 | 0 | 0 | 13 | 10 | 1 | 1 | 0 |
| conv2 | 0 | 0 | 0 | 0 | 13 | 2 | 0 | 14 | 1 | 0 | 2 | 13 | 2 | 15 | 0 | 0 | 14 | 4 | 10 | 1 | 0 |
| conv3 | 2 | 2 | 2 | 2 | 2 | 0 | 0 | 1 | 9 | 0 | 0 | 1 | 1 | 10 | 0 | 0 | 10 | 9 | 1 | 0 | 0 |
| conv4 | 3 | 0 | 0 | 0 | 0 | 7 | 5 | 14 | 0 | 0 | 1 | 14 | 2 | 5 | 0 | 0 | 15 | 2 | 14 | 0 | 0 |

Fig. 1

EP 3 879 474 A1

Conv j

Conv i

The proximity between two
conversations means that the
conversations has the same
usage context

space of J dimension

Fig. 2

Context j

Context i

The proximity between two usage contexts means that the contexts are positive correlated

space of N dimension

Fig. 3

Fig. 4

### Eigenvalues

|  | Dim.1 | Dim.2 | Dim.3 |
|---|---|---|---|
| Variance | 9,942 | 4,233 | 2,825 |
| % of var. | 58,482 | 24,899 | 16,619 |
| Cumulative | 58,482 | 83,381 | 100 |

### Individuals

|  | Dist | Dim.1 | ctr | cos2 | Dim.2 | ctr | cos2 | Dim.3 | ctr | cos2 |
|---|---|---|---|---|---|---|---|---|---|---|
| Conv1 | 4,011 | -3,145 | 24,876 | **0,615** | 1,262 | 9,405 | 0,099 | **2,145** | 40,719 | 0,286 |
| Conv2 | 4,2 | 3,082 | 23,891 | **0,539** | -2,667 | 42,004 | 0,403 | **1,014** | 9,105 | 0,058 |
| Conv3 | 4,013 | -3,16 | 25,112 | **0,62** | -1,2 | 8,508 | 0,089 | **-2,162** | 41,38 | 0,29 |
| Conv4 | 4,262 | 3,223 | 26,121 | 0,572 | 2,605 | 40,083 | 0,374 | -0,997 | 8,796 | 0,055 |

### Variables (the 10 first)

|  | Dim.1 | ctr | cos2 | Dim.2 | ctr | cos2 | Dim.3 | ctr | cos2 |
|---|---|---|---|---|---|---|---|---|---|
| Mo | -0,214 | 0,461 | 0,046 | 0,885 | 18,513 | 0,784 | -0,413 | 6,037 | 0,171 |
| Tu | -0,905 | 8,241 | 0,819 | -0,167 | 0,658 | 0,028 | -0,391 | 5,412 | 0,153 |
| We | -0,904 | 8,215 | 0,817 | 0,194 | 0,889 | 0,038 | 0,382 | 5,157 | 0,146 |
| Th | -0,962 | 9,302 | 0,925 | 0,13 | 0,397 | 0,017 | 0,242 | 2,067 | 0,058 |
| Fr | 0,495 | 2,468 | 0,245 | -0,834 | 16,423 | 0,695 | 0,244 | 2,107 | 0,06 |
| Sa | 0,796 | 6,373 | 0,634 | 0,548 | 7,092 | 0,3 | -0,257 | 2,344 | 0,066 |
| Su | 0,25 | 0,627 | 0,062 | 0,963 | 21,908 | 0,927 | 0,102 | 0,366 | 0,01 |
| HO | 0,993 | 9,922 | 0,986 | 0,035 | 0,028 | 0,001 | 0,111 | 0,437 | 0,012 |
| OF | -0,995 | 9,955 | 0,99 | -0,023 | 0,012 | 0,001 | 0,099 | 0,345 | 0,01 |
| RS | 0 | 0 | NaN | 0 | 0 | NaN | 0 | 0 | NaN |

Fig. 5

PCA - Biplot

Fig. 6

EP 3 879 474 A1

|  | conv1 | conv2 | conv3 | conv4 |
|---|---|---|---|---|
| **Mo** | 4,5134205 | 5,8332116 | 4,6316518 | 4,4888129 |
| **Tu** | 4,2413115 | 5,6715087 | 3,519688 | 5,7841018 |
| **We** | 3,5165636 | 5,7122887 | 4,2439114 | 5,7438512 |
| **Th** | 3,5913727 | 5,7470002 | 4,0630083 | 5,7935532 |
| **Fr** | 5,3241287 | 3,7675764 | 5,0711524 | 5,2670626 |
| **Sa** | 5,3931883 | 4,7859077 | 5,4572726 | 3,7717471 |
| **Su** | 4,5884753 | 5,4199744 | 5,3457487 | 4,1221591 |
| **HO** | 5,5099638 | 4,078835 | 5,6502913 | 4,1324062 |
| **OF** | 3,7349532 | 5,7099682 | 3,8621906 | 5,8761776 |
| **SC** | 5,5315594 | 3,7592643 | 5,4915021 | 4,5948385 |
| **READ** | 5,1891215 | 4,2824423 | 5,7761637 | 4,1675494 |
| **WRITE** | 3,70999 | 5,3054445 | 5,1203136 | 5,2791191 |
| **CALL** | 5,5700505 | 4,0081624 | 4,6924321 | 5,1855229 |
| **NOM** | 5,0686116 | 4,4595154 | 5,7788831 | 4,1262084 |
| **PC** | 3,7444733 | 5,6070593 | 3,8995453 | 5,9441059 |
| **SPH** | 5,5498596 | 4,3169723 | 5,5762298 | 3,9329002 |
| **CAR** | 4,29772 | 4,4684605 | 5,2007119 | 5,523976 |

Fig. 7

Importance score

|       | conv1 | conv2 | conv3 | conv4 |
|-------|-------|-------|-------|-------|
| Mo    | 4,531 | 3,388 | 5,46  | 3,322 |
| Tu    | 4,313 | 3,337 | 4,203 | 4,337 |
| We    | 5,465 | 3,364 | 4,528 | 3,346 |
| Th    | 5,345 | 3,34  | 4,724 | 3,313 |
| Fr    | 3,649 | 5,157 | 3,831 | 3,689 |
| Sa    | 3,599 | 4,055 | 3,556 | 5,146 |
| Su    | 4,245 | 3,593 | 3,643 | 4,725 |
| HO    | 3,516 | 4,749 | 3,428 | 4,688 |
| OF    | 5,136 | 3,36  | 4,967 | 3,265 |
| SC    | 3,503 | 5,155 | 3,529 | 4,217 |
| READ  | 3,742 | 4,534 | 3,361 | 4,659 |
| WRITE | 5,233 | 3,659 | 3,792 | 3,678 |
| CALL  | 3,493 | 4,854 | 4,146 | 3,752 |
| NOM   | 3,834 | 4,358 | 3,363 | 4,71  |
| PC    | 5,126 | 3,423 | 4,922 | 3,229 |
| SPH   | 3,491 | 4,488 | 3,475 | 4,927 |
| CAR   | 4,535 | 4,362 | 3,748 | 3,528 |

Fig. 8

**Important** `importance score >40`

| Con. A | `importance score 100` |
| --- | --- |
| | `importance score 90` |
| Con. B | `importance score 70` |
| ... | |
| | `importance score 50` |

| Con. C | `importance score 30` |
| --- | --- |
| | `importance score 10` |
| ... | |
| | `importance score 0` |

Fig. 9

| Conv. A | |
| --- | --- |
| Creating posts | 30 |
| Thorough reading | 30 |
| Frequency of usage | 40 |

| Conv. B | |
| --- | --- |
| Creating posts | 10 |
| Thorough reading | 30 |
| Regular usage | 50 |

| Conv. C | |
| --- | --- |
| Creating posts | 10 |
| Thorough reading | 0 |
| Regular usage | 20 |

| Conv. A | A | B | C | D | E | F | G | H | I | J | K | L |
|---|---|---|---|---|---|---|---|---|---|---|---|---|
| Creating posts | 12 | 18 | 20 | 14 | 29 | 12 | 14 | 24 | 12 | 17 | 12 | 11 |
| Throrough reading | 14 | 16 | 10 | 5 | 6 | 3 | 12 | 6 | 3 | 5 | 2 | 0 |
| Frequency of usage | 3 | 8 | 16 | 9 | 13 | 12 | 13 | 7 | 8 | 12 | 16 | 10 |
| Total | 29 | 42 | 46 | 28 | 48 | 27 | 39 | 37 | 23 | 34 | 30 | 21 |

Fig. 10

EP 3 879 474 A1

Europäisches
Patentamt

European
Patent Office

Office européen
des brevets

# EUROPEAN SEARCH REPORT

**Application Number**

EP 20 16 3032

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/010641 A1 (WOLFF ADAM G [US] ET AL) 13 January 2011 (2011-01-13)<br>* figures 1A,1B *<br>* claim 1 *<br>----- | 1-12 | INV.<br>G06Q10/10 |

TECHNICAL FIELDS
SEARCHED      (IPC)

G06Q

The present search report has been drawn up for all claims

| Place of search | Date of completion of the search | Examiner |
|---|---|---|
| Munich | 8 September 2020 | Michalski, Stéphane |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

 

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 20 16 3032

This annex lists the patent family members relating to the patent documents cited in the above-mentioned European search report.
The members are as contained in the European Patent Office EDP file on
The European Patent Office is in no way liable for these particulars which are merely given for the purpose of information.

08-09-2020

| Patent document cited in search report | Publication date | Patent family member(s) | Publication date |
|---|---|---|---|
| US 2011010641 A1 | 13-01-2011 | US 2011010641 A1<br>WO 2010135746 A1 | 13-01-2011<br>25-11-2010 |

EPO FORM P0459

For more details about this annex : see Official Journal of the European Patent Office, No. 12/82